(19) Europäisches Patentamt
European Patent Office
Office européen des brevets

(11) **EP 1 357 707 B1**

(12) **EUROPÄISCHE PATENTSCHRIFT**

(45) Veröffentlichungstag und Bekanntmachung des Hinweises auf die Patenterteilung:
**11.04.2012 Patentblatt 2012/15**

(51) Int Cl.:
***H04L 1/00*** *(2006.01)* ***H04L 12/56*** *(2006.01)*

(21) Anmeldenummer: **03004008.3**

(22) Anmeldetag: **24.02.2003**

(54) **Verfahren zur Übertragung von Nachrichten auf einem Bussystem**

Method for transferring messages via a bus system

Méthode pour transférer des messages via un système de bus

(84) Benannte Vertragsstaaten:
**DE ES FR GB IT SE**

(30) Priorität: **15.04.2002 DE 10216674**

(43) Veröffentlichungstag der Anmeldung:
**29.10.2003 Patentblatt 2003/44**

(73) Patentinhaber: **ROBERT BOSCH GMBH**
**70442 Stuttgart (DE)**

(72) Erfinder:
- **Mueller, Bernd**
  **71229 Leonberg (DE)**
- **Fuehrer, Thomas**
  **70839 Gerlingen (DE)**

(56) Entgegenhaltungen:
**EP-A1- 0 616 286**
**EP-A2- 0 464 014**
**WO-A1-01/03356**
**US-A- 5 854 840**
**US-A1- 2002 036 993**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 357 707 B1

Printed by Jouve, 75001 PARIS (FR)

## Beschreibung

Stand der Technik

Die Erfindung betrifft ein Verfahren zur Übertragung von Nachrichten auf einem Bussystem.

Die Vernetzung von Steuergeräten, Sensorik und Aktuatorik mit Hilfe eines Kommunikationssystems oder Bussystems hat in den letzten Jahren beim Bau von modernen Kraftfahrzeugen oder auch im Maschinenbau, insbesondere im Werkzeugmaschinenbereich als auch in der Automatisierung drastisch zugenommen. Synergieeffekte durch Verteilung von Funktionen auf mehrere Steuergeräte können dabei erzielt werden. Man spricht hierbei von verteilten Systemen. Die Kommunikation zwischen verschiedenen Stationen bzw. Teilnehmern findet mehr und mehr über einen Bus bzw. ein Bussystem statt. Der Kommunikationsverkehr auf dem Bussystem, Zugriffs- und Empfangsmechanismen sowie Fehlerbehandlung werden über ein Protokoll geregelt.

Als Protokoll im Kfz-Bereich etabliert ist der CAN (controller area network). Dies ist ein ereignisgesteuertes Protokoll, d. h. Protokollaktivitäten wie das Senden einer Nachricht werden durch Ereignisse initiiert, die ihren Ursprung außerhalb des Kommunikationssystems selbst haben. Der eindeutige Zugang zum Kommunikationssystem bzw. Bussystem wird über eine prioritätsbasierte Bitarbitrierung gelöst. Eine Voraussetzung dafür ist, dass jeder Nachricht eine eindeutige Priorität zugewiesen ist. Das CAN-Protokoll ist sehr flexibel. Ein Hinzufügen weiterer Knoten und Nachrichten ist damit problemlos möglich, solange es noch freie Prioritäten gibt.

Ein alternativer Ansatz zu einer solchen ereignisgesteuerten spontanen Kommunikation ist der rein zeitgesteuerte Ansatz. Alle Kommunikationsaktivitäten auf dem Bus sind strikt periodisch. Protokollaktivitäten wie das Senden einer Nachricht werden nur durch das Fortschreiten einer für das gesamte Bussystem gültigen Zeit ausgelöst. Der Zugang zum Medium basiert auf der Zuteilung von Zeitbereichen bzw. Zeitabschnitten, in denen ein Sender exklusives Senderecht hat. Ein Hinzufügen von neuen Knoten wird dann möglich, wenn zuvor die entsprechenden Zeitabschnitte freigelassen wurden. Dieser Umstand erzwingt, die Nachrichtenreihenfolge schon vor Inbetriebnahme festzusetzen, wobei ein Fahrplan erstellt wird, der den Anforderungen der Nachrichten bezüglich Wiederholrate, Redundanz, Deadlines usw. genügen muss.

Neben dem ereignisgesteuerten Ansatz und dem rein zeitgesteuerten Ansatz ist auch ein zeitgesteuerter CAN-Ansatz, der sogenannte TTCAN (time triggered controller area network) bekannt. Dieser genügt den oben skizzierten Forderungen nach zeitgesteuerter Kommunikation sowie den Forderungen nach einem gewissen Maß an Flexibilität. Der TTCAN erfüllt dies durch den Aufbau der Kommunikationsrunde (basic cycle) in sogenannte exklusive Zeitfenster bzw. Zeitabschnitte für periodische Nachrichten bestimmter Kommunikationsteilnehmer und in sogenannte arbitrierende Zeitfenster oder Zeitabschnitte für spontane Nachrichten mehrerer Kommunikationsteilnehmer.

Neben dem genannten Bussystem ist eine Vielzahl von Bus- bzw. Kommunikationssystemen zur Verbindung von Teilnehmern in verteilten Systemen bekannt. In solchen Kommunikationssystemen wie beispielsweise CAN, TTP/C, Byteflight oder FlexRay ist es möglich, Nachrichten verschiedener Länge zu verschikken. Die maximale Länge der Nachrichten bzw. eines Nachrichtenrahmens, in dem diese übertragen wird, ist dabei offline als Teil der Protokollspezifikation definiert, so dass ein Nachrichtenrahmen oder Nachrichtenframe zwischen 0 und n Datenbytes enthalten kann (n ist dabei eine protokollspezifische Konstante mit $n \in N0$). All diesen Protokollen ist gemeinsam, dass der Nachrichteninhalt über Hinzufügen von in der Regel aus dem Nachrichteninhalt, also der Nachricht selbst, berechneten Absicherungssequenz im Allgemeinen als binäre Information, insbesondere als Bits oder Bytes, abgesichert wird. D. h. der gesamte Nachrichtenframe oder Nachrichtenrahmen besteht aus Rahmenparametern oder Frameparametern wie beispielsweise Anfangs- und Endbit, den Daten und der Absicherungssequenz. Typischerweise wird diese Absicherungssequenz über ein Absicherungspolynom, insbesondere ein CRC-Polynom (CRC: cyclic redundancy check) berechnet. Dies erlaubt es, Bitfehler durch die Inkonsistenz zwischen Daten und CRC-Bits in sehr einfacher Weise festzustellen. Damit ist es möglich, Fehler, die weniger als eine bestimmte Anzahl K ($K \in N0$) gekippte, also veränderte Bits enthalten, sicher zu erkennen. K entspricht dabei der Hamming-Distanz, wobei der Wert von K durch die Wahl des Absicherungspolynoms bestimmt wird. Beim controller area network kann diese Hamming-Distanz z. B. K = 6 sein. Bei einer optimalen Wahl der Hamming-Distanz sind aber die wesentlichen limitierenden Parameter die maximale Nachrichtenlänge sowie die Zahl der Zusatzbits. Daraus ergibt sich, dass es beispielsweise mit 16 Zusatzbits und einer maximalen Nachrichtenlänge von 50 Datenbytes nicht möglich ist, eine Hamming-Distanz von 6, also K = 6 aufrechtzuerhalten. Dies ist nur ein Beispiel, welches zeigt, dass eine wie bisher verwendete statische maximale Nachrichtenlänge Probleme im Rahmen der Absicherung der Datenübertragung aufwerfen kann.

Aus der US 5,854,840 ist ein Datenkommunikationsprotokoll bekannt mit einem vorbestimmten Datenmuster. Dieses weist ein Zählfeld auf, welches ein Datenfeld definiert. Dieses Datenfeld weist eine maximale Datenlänge auf. Des Weiteren ist hierfür ein Zählfeld beschrieben, das die Länge eines Nutzdatenfeldes angibt, sowie ein CRC-Feld vorgegebener Länge.

Die EP 0 616 286 A1 offenbart einen Datenbus zur Verbindung verschiedener Stationen einer Datenverarbeitungsanlage. Die EP 0 464 014 A2 geht von einem Datenkommunikationssystem aus, welches ein fehlertolerantes Protokoll nutzt. In beiden Schriften werden Kennzeichen innerhalb der Nachrichtenrahmen beschrieben, durch welche z.B. Anfang der Nachricht oder Länge der Nachricht angegeben werden.

So zeigt sich, dass der Stand der Technik nicht in jeder Hinsicht optimale Ergebnisse zu liefern vermag. Deshalb ist es Aufgabe der Erfindung, die oben genannten Probleme zu beseitigen und die Situation zur Absicherung von Nachrichten zu verbessern, insbesondere eine höhere Flexibilität zu erzielen.

Vorteile der Erfindung

Die Erfindung geht aus von einem Verfahren gemäß dem unabhängigen Anspruch 1. Damit beschreibt die Erfindung ein Verfahren, das es erlaubt, die maximale Nachrichtenlänge dynamisch zu verändern.

Weiterhin von Vorteil ist, dass die Absicherungssequenz abhängig von dem ersten Kennzeichen oder der vorgegebenen maximalen Länge der zu übertragenden Nachricht ist. Gleichermaßen von Vorteil ist, dass die Absicherungssequenz durch ein Absicherungspolynom gebildet wird und das Absicherungspolynom abhängig von dem ersten Kennzeichen oder der vorgegebenen maximalen Länge der zu übertragenden Nachricht vorgegeben wird.' D. h. es ist nicht nur möglich, die maximale Nachrichtenlänge dynamisch zu verändern, sondern diese mit einem bezüglich dieser Nachrichtenlänge geeigneten Absicherungspolynom für Frameformate bzw. Nachrichtenrahmenformate ebenso wie die Absicherungssequenz selbst dynamisch zu verändern.

Zweckmäßiger Weise ist in dem Nachrichtenrahmen ein zweites Kennzeichen enthalten, welches die tatsächliche Nachrichtenlänge angibt, wobei dieses zweite Kennzeichen abhängig von dem ersten Kennzeichen angepasst wird. Dabei kann das zweite Kennzeichen zweckmäßiger Weise derart angepasst werden, dass eine Länge, insbesondere die Bitoder Bytezahl des zweiten Kennzeichens, verändert wird und/oder dass das zweite Kennzeichen derart angepasst wird, dass eine Maßeinheit, insbesondere die Wertigkeit der entsprechenden Bits oder Bytes für das zweite Kennzeichen verändert wird.

Vorteilhaft, werden die Nachrichten bzw. die entsprechenden Nachrichtenrahmen in eine Gesamtzahl von Nachrichtenklassen mit wenigstens zwei verschiedenen Nachrichtenklassen unterteilt. Dabei wird in einer weiterführenden Ausgestaltung zweckmäßiger Weise für eine erste Anzahl an Nachrichtenklassen jeweils die maximale Länge der jeweils zu übertragenden Nachricht durch das erste Kennzeichen vorgegeben und für eine zweite Anzahl an Nachrichtenklassen das erste Kennzeichen als Standardwert vorgegeben, wodurch für die zweite Anzahl eine je Nachrichtenklasse gleiche, maximale Länge der Nachrichten vorgegeben wird und die Variabilität bzw. Flexibilität der dynamischen Veränderung der maximalen Nachrichtenlänge für die erste Anzahl an Nachrichtenklassen erhalten bleibt.

Eine weitere zweckmäßige Möglichkeit wäre dann, das erste Kennzeichen lediglich in den Nachrichtenrahmen einer Unterzahl an Nachrichtenklassen mitzuführen, wobei diese Unterzahl kleiner als die Gesamtzahl der Nachrichtenklassen ist.

Dabei ist es besonders zweckmäßig, wenn die maximale Länge der zu übertragenden Nachricht und/ oder das erste Kennzeichen sowie eine Länge der Absicherungssequenz und/oder auch das Absicherungspolynom selbst einander eindeutig zugeordnet sind.

Zweckmäßiger Weise wird dabei das erste Kennzeichen als binäre Information vorgegeben, eben insbesondere als Bitoder Bytewert, wobei die Länge der binären Information, also insbesondere die Bit- oder Byteanzahl abhängig von der Gesamtzahl der Nachrichtenklassen vorgegeben wird. Gleichermaßen vorteilhaft ist es, wenn die Länge der binären Information abhängig von der ersten Anzahl und/oder der zweiten Anzahl an Nachrichtenklassen vorgegeben wird.

Eine zweckmäßige Weiterbildung der Erfindung zeigt ein erstes und ein zweites Absicherüngspolynom, wobei die Polynome so gestaltet sind, dass das zweite Absicherungspolynom Teil des ersten Absicherungspolynoms ist. Insbesondere bei Implementierung einer Polynomhardware für mehrere Alternativen ist es kostengünstiger, in einen Absicherungsblock, insbesondere das Absicherungspolynom, als Fortsetzung des kleineren Absicherungsblocks bzw.

Absicherungspolynoms zu wählen, so dass nur die Kosten für den größeren Block bzw. das größere Polynom vorzuhalten sind, da der Kleinere Teil des Größeren ist.

Durch Kenntnis der Erfindung ist es vorteilhaft, eine Speichereinrichtung in einem Bussystem, beispielsweise einen Nachrichtenpuffer oder sonstigen Speicher, insbesondere zur Vorbereitung der Nachricht bzw. des Nachrichtenrahmens vor Übertragung des Bussystems, welche in Speicherbereiche aufgeteilt ist, zuzuordnen, also die Speicherbereiche abhängig von dem ersten Kennzeichen der Nachrichten vorzugeben bzw. aufzuteilen, da dann die Controllerimplementierung kostengünstig gehalten werden kann, wenn nicht für alle Nachrichtenobjekte die maximale Länge der Nachrichten vorgehalten werden muss. Dazu kann der Speicher oder Speicherblock eben abhängig von den ersten Kennzeichen, die die unterschiedlichen Längen der Nachrichtenobjekte zeigen, so konfiguriert werden, dass weniger Speicherplatz eingesetzt werden muss.

So kann vorteilhafter Weise für kurze Nachrichten ein kurzes Frameformat verwendet werden.

Für den Fall, dass sich dynamische Nachrichten die Bandbreite bezüglich der Übertragen ergibt sich aus der Erfindung ein Bansbreitengewinn.

Gleichzeitig verbessert sich die Möglichkeit-die Kompatibilität bezogen auf die Nachrichtenübertragung bei einem hohen Maß an Flexibilität zu optimieren.

Weitere Vorteile und vorteilhafte Ausgestaltungen ergeben sich aus der Beschreibung sowie den Merkmalen der Ansprüche.

Zeichnung

Die Erfindung wird im Weiteren anhand der in der Zeichnung dargestellten Figuren näher erläutert.

Dabei zeigt

Figur 1 ein verteiltes System, also ein Netzwerk- bzw. ein Bussystem mit wenigstens einem Teilnehmer sowie Mitteln zur Durchführung des erfindungsgemäßen Verfahrens.

Figur 2 zeigt verschiedene Nachrichtenrahmen bzw. Nachrichtenformate mit unterschiedlichen maximalen Längen der Nachricht zur Erläuterung des erfindungsgemäßen Gegenstandes.

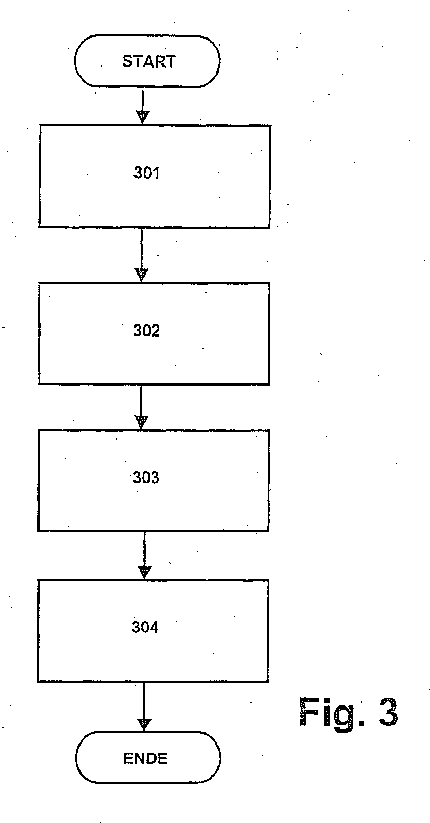

Figur 3 zeigt noch einmal in einem Flussdiagramm beispielhaft eine Anwendung des erfindungsgemäßen Verfahrens.

Beschreibung der Ausführungsbeispiele

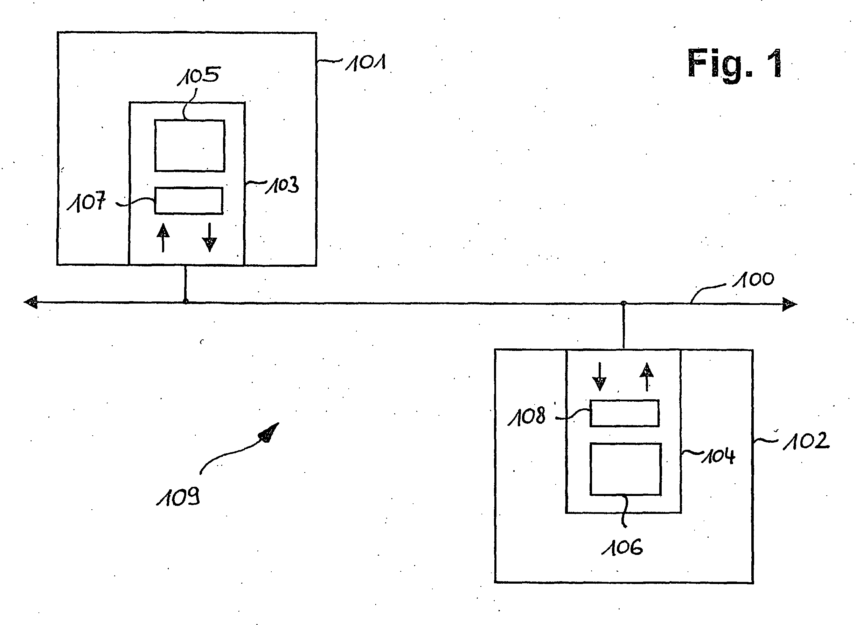

Figur 1 zeigt ein Bussystem 100 mit einem ersten Teilnehmer 101 und einem zweiten Teilnehmer 102, also ein verteiltes System. Da die Kommunikation zum Einen durch die Teilnehmer selbst bzw. darin enthaltener Recheneinheiten oder Steuereinheiten sowie durch separate Steuereinheiten möglich ist, beispielsweise einen Buscontroller, der intern oder extern bezogen auf den Teilnehmer gelagert ist, werden im Weiteren die Begriffe des Bussystems und des verteilten Systems sowie Kommunikationssystems gleichbedeutend verwendet. D. h. das Bussystem kann sowohl die reine Kommunikationsverbindung mit Steuereinheiten zur Aufrechterhaltung bzw. Bewerkstelligung der Kommunikation als auch die Kommunikationsverbindung mit angeschlossenen Teilnehmern, die ihrerseits die Kommunikation bewerkstelligen sowie aus den Varianten vermischte Systeme sein.

Die Teilnehmer 101 und 102 zeigen eine Schnittstelle 103 bzw. 104 zum Bus 100 mit einer Verarbeitungseinheit 105 bzw. 106 und einer Speichereinrichtung, insbesondere einem Pufferspeicher 107 bzw. 108. Die Verarbeitungseinheit und der Pufferspeicher sind hier im Beispiel in beiden Fällen in einem Buscontroller, eben der Schnittstelleneinheit 103 bzw. 104 untergebracht.

Aus Übersichtlichkeitsgründen ist hier nur eine konkrete Ausgestaltung dargestellt. Selbstverständlich ist auch denkbar, die Verarbeitungseinheiten 105 bzw. 106 und/oder die Puffer bzw. Speichereinrichtungen 107 und 108 nicht direkt in der Buscontroller- oder Busverarbeitungseinheit bzw. Busschnittstelle 103 oder 104 unterzubringen, sondern in beliebiger Kombination in den Teilnehmer oder aus dem Teilnehmer zu verlagern, d. h. der Pufferspeicher könnte extern oder intern oder auch im Teilnehmer selbst untergebracht sein. Gleiches gilt für die Verarbeitungseinheiten 105 bzw. 106.

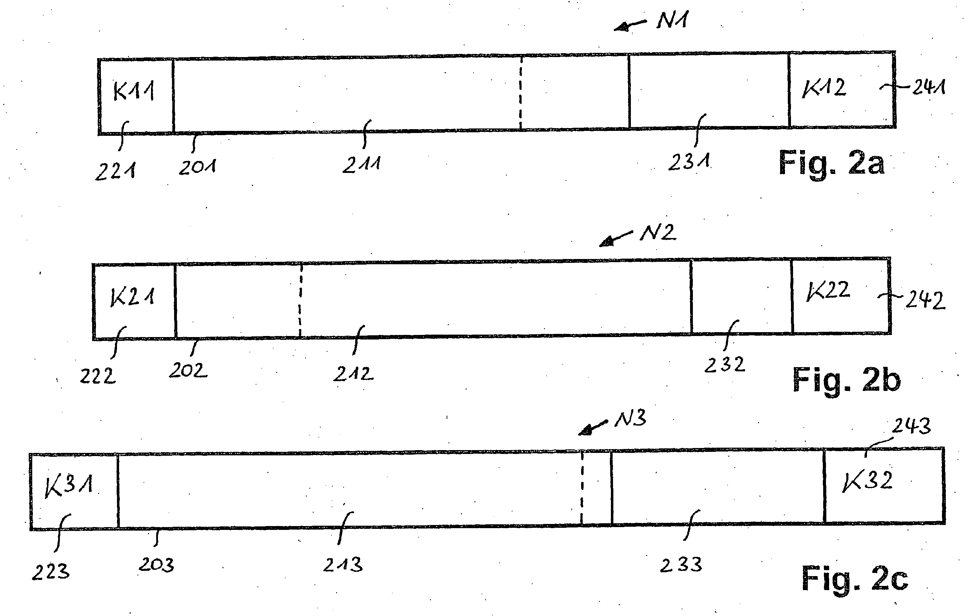

Über den in Figur 1 dargestellten Bus bzw. das verteilte System 109 können nun Nachrichten verschiedener Länge übertragen werden. Unterschiedliche Nachrichtenrahmen sind dazu in Figur 2, bestehend aus Figur 2a, Figur 2b und Figur 2c dargestellt. Darin zeigt Figur 2a einen Nachrichtenrahmen N1, wobei der gesamte Rahmen mit 201 bezeichnet ist. Dieser Rahmen enthält im Feld 221 eine erste Kennung K11, welche die maximale Länge der Nachricht bzw. des Nachrichtenrahmens N1 vorgibt. Die Nachricht selbst innerhalb des Nachrichtenrahmens N1 ist in Block 211 lokalisiert, wobei die Größe des Blockes 211 die maximale Länge der Nachricht in den Nachrichtenrahmen N1 übertragen werden kann. In Block 231 ist eine Absicherungssequenz, insbesondere gebildet durch ein Absicherungspolynom, lokalisiert. Im Rahmen des Absicherungspolynoms bzw. zur Erstellung der Absicherungssequenz ebenso wie zur Prüfung der Absicherungssequenz werden Absicherungsverfahren, insbesondere zyklische Absicherungsverfahren wie der cyclic redundancy check CRC verwendet. Des Weiteren ist mit Block 241 eine zweite Kennung K12 des Nachrichtenrahmens N1 lokalisiert, welche die tatsächliche Nachrichtenlänge in Block 211 kennzeichnet. D. h. nur im Spezialfall, wenn die Nachricht die maximale Nachrichtenlänge innehat, könnten für K11 und K12 auch gleiche Kennungen verwendet werden. Andernfalls unterscheidet sich die maximal mögliche Nachrichtenlänge von der tatsächlich in Block 211 lokalisierten Nachrichtenlänge. Insbesondere Block 241 ist dabei optional, d. h. die zweite Kennung kann, muss aber per Definition nicht vorhanden sein. In Figur 2b ist ein Nachrichtenrahmen N2 dargestellt, der eine größere maximale Nachrichtenlänge gemäß Block 212 zulässt. Im Block 222 ist mit K21 wieder ein erstes Kennzeichen für Nachrichtenrahmen N2 und mit Block 242 ein zweites Kennzeichen K22 für diesen Nachrichtenrahmen N2 dargestellt. Block 232 enthält wiederum eine Absicherungssequenz, die beispielsweise durch Verwendung eines anderen Absicherungspolynoms, hier insbesondere kürzer ausfüllt als im Block 231 von Nachrichtenrahmen N1.

Ein weiterer Nachrichtenrahmen N3 ist in Figur 2c dargestellt. Dieser Nachrichtenrahmen mit Block 203 hat nun wiederum eine andere maximale Länge der Nachricht im Block 213. Diese maximale Länge ist codiert in Block 223 mit einer ersten Kennung oder einem ersten Kennzeichen K31. Ebenso ist wieder optional ein zweites Kennzeichen K32 im Block 243 dargestellt, welches auch hier die tatsächliche Nachrichtenlänge symbolisiert. Ein wiederum weiterer Absicherungsmechanismus, also ein anderes Absicherungspolynom, generiert eine Absicherungssequenz in Block 232 als längste der drei dargestellten Absicherungssequenzen. D. h. je nach maximaler Nachrichtenlänge in den Blöcken 211 bis 213 und für die Nachrichtenrahmen N1 bis N3 verwendeten Absicherungspolynome ergeben sich unterschiedlich lange Absicherungssequenzen, dargestellt durch die Blöcke 231 bis 233. Abhängig von der tatsächlichen Nachrichtenlänge, dargestellt durch die gestrichelten Linien in den Blökken 211 bis 213 der Nachrichtenrahmen N1 bis N3, ergeben sich unterschiedliche Kennzeichen K12, K22 und K32 in den Blöcken 241 bis 243.

Voraussetzung für den erfindungsgemäßen Gegenstand ist somit die Existenz eines Kennzeichens, also zumindest eines Bits im Nachrichtenrahmen bzw. im Frameformat, das zur Unterscheidung der verschiedenen Nachrichtenformate verwendet werden kann. D. h. es werden unterschiedliche maximale Längen der Nachrichten unterschieden, ebenso wie unterschiedliche Absicherungspolynome. Im Folgenden wird die Beschreibung für das Flexray-Protokoll vorgenommen. Das Verfahren ist aber allgemein anwendbar. Des Weiteren wird im Folgenden von einem Bit, bezogen auf die Kennzeichen K11, K21, K31, ausgegangen, wobei auch hier eine längere Kennung bzw. längeres Kennzeichen selbstverständlich möglich sind. Wird von einem Bit ausgegangen, gibt es eben beispielsweise zwei Ausbaustufen des Nachrichtenformats. Entsprechendes ist aber auch, wie bereits erwähnt, für mehrere z. B. sukzessive Ausbaustufen möglich.

In Flexray kann beispielsweise als das gerade erwähnte Bit das MUX-Bit verwendet werden.

In diesem Fall bedeutet z. B.

MUX = 0:

Verwende als Frameformat das CRC-Polynom P1 bis zu 12 Byte Daten und einer zweiten Kennung, also einem Data-Length-Code DLC von 4 Bit. Der 4-Bit-Wert gibt dabei, wie erwähnt, die verwendete Länge des Datenfelds 0 bis 12 in Byte an. Dies entspricht dem Standardformat.

MUX = 1:

Verwende als Frameformat das CRC-Polynom P2 bis zu N2-Byte-Daten (je nach Ziel kann N2 z. B. 50 oder 200 oder irgendein Wert sein) und ein DLC, also eine zweite Kennung, von M = 8 Bit. Der M-Wert kann dabei die verwendete Länge des Datenfelds 0 bis 256 im Falle M = 8 in Byte angeben. Die Einheit, also Maßeinheit, könnte aber auch 2 oder 4 Byte sein. Dann kann je nach Ziel unter Umständen auch der Wert M = 4 weiterverwendet werden.

Zusammenfassend bedeutet das also, man kann über ein Bit das Frameformat verändern, das geänderte Frameformat beinhaltet auch einen geänderten cyclic redundancy check CRC, und falls im Frameformat auch eine Angabe der tatsächlich verwendeten Nachrichtenlänge, ein DLC-Feld (zweites Kennzeichen), enthalten ist, muss dieses mitverändert werden. Diese Veränderung der zweiten Kennung, also des DLC-Feldes, kann entweder über eine Vergrößerung des DLC-Feldes, wie beispielsweise K32 größer als K22 erfolgen oder über eine Veränderung der Einheit oder Maßeinheit, beispielsweise von einem Byte auf 2 Byte oder 4 Byte gemacht werden. Auch beide Maßnahmen sind möglich.

Damit ergeben sich als wesentliche Vorteile der Erfindung, dass für kurze Nachrichten ein kurzes Frameformat verwendet werden kann. Hat man beispielsweise das Ziel, immer eine Hamming-Distanz von 6 zu garantieren, so muss man für lange Nachrichten z. B. 3 Byte CRC spendieren, obwohl bei kurzen Nachrichten auch 2 Byte für den CRC ausreichend wären. Zusätzlich ist das Datenlängenfeld noch auf die Maximalgröße hin auszulegen. Insgesamt kann man damit, gerade wenn kurze Nachrichten der Regelfall sind, Bandbreite sparen.

Dies gilt insbesondere dann, wenn, wie beispielsweise bei Flexray, dynamische Nachrichten sich die Bandbreite teilen. Dann führt eine spontane Längenänderung über das Applikations-Know-How zu einem Bandbreitengewinn. Damit ergibt sich die Möglichkeit, Kompatibilität beizubehalten. Dies ist gerade in Einzelfällen sehr wichtig.

Die dargestellte Erfindung muss nicht notwendiger Weise auf alle Nachrichten angewendet werden. Wenn beispielsweise, insbesondere via Protokoll oder auch Applikation, zwischen verschiedenen Nachrichtenklassen unterschieden wird, so kann für eine Nachrichtenklasse die erste Kennung eingesetzt werden und damit eine dynamische Änderung der maximalen Nachrichtenlänge erzielt werden und für wenigstens eine andere Klasse kann entweder die Kennung gar nicht verwendet oder eine Default-Konfiguration eingesetzt werden, also ein Standardwert, wodurch die gesamte Klasse eine einheitliche maximale Nachrichtenlänge erhält. Dadurch ist die genannte Flexibilität im Rahmen der dynamischen Nachrichtenanpassung auf einzelne Nachrichtenklassen begrenzbar.

Wenn man, wie bereits erwähnt, mehr als ein Bit im Frameformat hat, können auch mehr entsprechend der Bitzahl Klasse unterschieden werden. Dies ist auch sukzessive möglich, d. h. in der Ursprungsklasse hat man nur 1 Bit, im erweiterten Format fügt man ein neues Bit hinzu, das wieder ähnlich verwendet werden kann usw.

Um bei einer Controllerimplementierung im Rahmen des erfindungsgemäßen Gegenstandes kostengünstig zu bleiben, ist es vorteilhaft, nicht den Speicher für alle Nachrichtenobjekte in der maximalen Länge vorzuhalten, sondern es ist günstiger, z. B. einen gegebenen Speicherblock, insbesondere im Rahmen der Speichereinrichtungen 108 und 107, beispielsweise der Größe von 256 Byte alternativ in z. B. 4 x 64, 8 x 32, 16 x 16, 2 x 62 und 8 x 16 (usw.) Byteblöcke zu konfigurieren. Insbesondere von Vorteil ist, diese Konfiguration abhängig von der ersten Kennung zu machen, da durch die erste Kennung alle maximalen Nachrichtenlängen und damit insbesondere auch maximale Nachrichtenrahmenlängen ermittelbar sind, so dass eine sehr gut abgestimmte Ausnutzung des Speichers erfolgen kann.

Des Weiteren ist es möglich, die CRC-Hardware für die beiden Alternativen bei Verwendung eines Bits und zweier Klassen getrennt zu implementieren.

Gleiches gilt für mehrere Klassen. Ein kostengünstiger Vorteil ist es, den zweiten beispielsweise größeren CRC-Block als Fortsetzung eines kleineren des ersten CRC-Blocks zu wählen, weil das in Hardware bedeutet, dass nur die Kosten für den größeren CRC-Block vorzuhalten sind, da der kleine CRC-Block Teil des größeren ist.

In Figur 1 ist nun noch einmal kurz ein erfindungsgemäßer Verfährensablauf skizziert. Nach dem Start des Verfahrens wird im Block 301 ein entsprechender Nachrichtenrahmen vorbereitet. Dazu wird in diesem Block 301 die zu übertragende Nachricht zu Grunde gelegt. Zu dieser zu übertragenden Nachricht ergibt sich eine erste Kennung, welche dem Nachrichtenrahmen hinzugefügt wird. Durch diese Kennung wird im Block 301 die maximale Länge der zu übertragenden Nachricht vorgegeben. Im Block 302 wird nun das Absicherungspolynom, insbesondere im Rahmen des cyclic redundancy check durchlaufen und damit die Absicherungssequenz ermittelt bzw. berechnet. Diese wird ebenfalls dem Nachrichtenrahmen hinzugefügt.

Im Block 303 wird die nun fertige Nachricht, also der entsprechende Nachrichtenrahmen auf dem Bussystem versendet, beispielsweise aus dem Pufferspeicher.

Diese wird dann im Block 304 von einem weiteren Teilnehmer empfangen, welcher aufgrund der ersten Kennung die maximale Länge der jeweils zu übertragenden Nachricht und damit direkt zugeordnet das verwendete Absicherungsverfahren, insbesondere das entsprechende Absicherungspolynom, erkennt und somit die korrekte Nachrichtenübertragung mit Hilfe der Absicherungssequenz überprüfen kann. Damit ist die Nachrichtenübertragung vollzogen und das Verfahren durchlaufen.

Optional kann hierbei in Block 301 oder Block 302 das zweite Kennzeichen, eben das Kennzeichen für die tatsächliche Nachrichtenlänge mit in den Nachrichtenrahmen eingefügt werden. Weitere Bits, die nicht erfindungswesentlich sind im Rahmen einer Nachrichtenübertragung, sind aus Gründen der Übersichtlichkeit hier nicht erwähnt und auch in Figur 2 nicht dargestellt.

Damit ergibt die Erfindung ein Verfahren, eine Vorrichtung bzw. ein Bussystem sowie einen Speicher, eine Speichereinrichtung, welche es erlauben, die maximale Nachrichtenlänge zusammen mit einem bezüglich dieser Nachrichtenlänge geeigneten Absicherungspolynom für Frameformate dynamisch zu verändern, um so ein flexibles, angepasstes und optimiertes Frameformat für die jeweilige Anwendung zur Verfügung zu haben.

## Patentansprüche

1. Verfahren zur Übertragung von Nachrichten auf einem Bussystem (100), wobei die Nachrichten in Nachrichtenrahmen (201, 202, 203) übertragen werden und der Nachrichtenrahmen neben der Nachricht auch eine Absicherungssequenz (231, 232, 233) enthält, wobei in dem Bussystem Nachrichten verschiedener Länge übertragen werden können und für alle in dem Bussystem zu übertragenden Nachrichten eine maximale Länge einer Nachricht vorgegeben ist, wobei ein erstes Kennzeichen (221, 222, 223) im Nachrichtenrahmen enthalten ist durch welches die maximale Länge der jeweils zu übertragenden Nachricht vorgegeben werden kann, **dadurch gekennzeichnet, dass** die Nachrichten in eine Gesamtzahl von Nachrichtenklassen mit wenigstens zwei verschiedenen Nachrichtenklassen unterteilt sind, wobei eine Gesamtzahl an Nachrichtenklassen existiert, wobei das erste Kennzeichen (221, 222, 223) in den Nachrichtenrahmen einer Unterzahl an Nachrichtenklassen enthalten ist und die Unterzahl kleiner als die Gesamtzahl ist.

2. Verfahren nach Anspruch 1, **dadurch gekennzeichnet, dass** die Absicherungssequenz (231, 232, 233) abhängig von dem ersten Kennzeichen oder der vorgegebenen maximalen Länge der zu übertragenden Nachricht ist.

3. Verfahren nach Anspruch 1, **dadurch gekennzeichnet, dass** die Absicherungssequenz (231, 232, 233) durch ein Absicherungspolynom gebildet wird und das Absicherungspolynom abhängig von dem ersten Kennzeichen (221, 222, 223) oder der vorgegebenen maximalen Länge der zu übertragenden Nachricht vorgegeben wird.

4. Verfahren nach Anspruch 1, **dadurch gekennzeichnet, dass** in dem Nachrichtenrahmen ein zweites Kennzeichen (241, 242, 243) ehthalten ist, welches die tatsächliche Nachrichtenlänge angibt, wobei dieses zweite Kennzeichen abhängig von dem ersten Kennzeichen angepasst wird.

5. Verfahren nach Anspruch 4, **dadurch gekennzeichnet, dass** das zweite Kennzeichen (241, 242, 243) derart angepasst wird, dass eine Länge des zweiten Kennzeichens verändert wird.

6. Verfahren nach Anspruch 4, **dadurch gekennzeichnet, dass** das zweite Kennzeichen (241, 242, 243) derart angepasst wird, dass eine Maßeinheit für das zweite Kennzeichen verändert wird.

7. Verfahren nach Anspruch 1, **dadurch gekennzeichnet, dass** eine Gesamtzahl an Nachrichtenklassen existiert und für eine erste Anzahl an Nachrichtenklassen jeweils die maximale Länge der jeweils zu übertragenden Nachricht durch das erste Kennzeichen (221, 222, 223) vorgegeben wird, wobei für eine zweite Anzahl an Nachrichtenklassen das erste Kennzeichen einem Standardwert entspricht, wodurch eine je Nachrichtenklasse gleiche maximale Länge der Nachrichten vorgegeben wird.

**8.** Verfahren nach Anspruch 1, **dadurch gekennzeichnet, dass** die maximale Länge der zu übertragenden Nachricht und/oder das erste Kennzeichen sowie eine Länge der Absicherungssequenz (231, 232, 233) einander eindeutig zugeordnet sind.

**9.** Verfahren nach Anspruch 3, **dadurch gekennzeichnet, dass** die maximale Länge der zu übertragenden Nachricht und/oder das erste Kennzeichen (221, 222, 223) sowie das Absicherungspolynom einander eindeutig zugeordnet sind.

**10.** Verfahren nach Anspruch 1, **dadurch gekennzeichnet, dass** das erste Kennzeichen (221, 222, 223) als binäre Information vorgegeben wird, wobei die Länge der binären Information abhängig von der Gesamtzahl der Nachrichtenklassen vorgegeben wird.

**11.** Verfahren nach Anspruch 8, **dadurch gekennzeichnet, dass** das erste Kennzeichen (221, 222, 223) als binäre Information vorgegeben wird, wobei die Länge der binären Information abhängig von einer ersten Anzahl und/oder einer zweiten Anzahl an Nachrichtenklassen vorgegeben wird.

**12.** Verfahren nach Anspruch 3, **dadurch gekennzeichnet, dass** ein erstes und ein zweites Absicherungspolynom unterschieden werden, wobei das zweite Absicherungspolynom Teil des ersten Absicherungspolynoms ist.

**Claims**

**1.** Method for transmitting messages on a bus system (100), wherein the messages are transmitted in message frames (201, 202, 203) and the message frame contains not only the message but also a protection sequence (231, 232, 233), wherein the bus system can be used to transmit messages of different length and a maximum length of message is prescribed for all messages to be transmitted in the bus system, wherein a first identifier (221, 222, 223) is contained in the message frame, which identifier can prescribe the maximum length of the respective message to be transmitted, **characterized in that** the messages are divided into a total number of message classes with at least two different message classes, wherein a total number of message classes exists, wherein the first identifier (221, 222, 223) is contained in the message frames from a short number of message classes and the short number is smaller than the total number.

**2.** Method according to Claim 1, **characterized in that** the protection sequence (231, 232, 233) is dependent on the first identifier or the prescribed maximum length of the message to be transmitted.

**3.** Method according to Claim 1, **characterized in that** the protection sequence (231, 232, 233) is formed by a protection polynomial and the protection polynomial is prescribed on the basis of the first identifier (221, 222, 223) or the prescribed maximum length of the message to be transmitted.

**4.** Method according to Claim 1, **characterized in that** the message frame contains a second identifier (241, 242, 243) which indicates the actual message length, wherein said second identifier is customized on the basis of the first identifier.

**5.** Method according to Claim 4, **characterized in that** the second identifier (241, 242, 243) is customized such that a length of the second identifier is altered.

**6.** Method according to Claim 4, **characterized in that** the second identifier (241, 242, 243) is customized such that a unit of measure for the second identifier is altered.

**7.** Method according to Claim 1, **characterized in that** a total number of message classes exists and, for a first number of message classes, the respective maximum length of the respective message to be transmitted is prescribed by the first identifier (221, 222, 223), wherein, for a second number of message classes, the first identifier corresponds to a standard value which prescribes a maximum length of the messages which is the same for each message class.

**8.** Method according to Claim 1, **characterized in that** the maximum length of the message to be transmitted and/or the first identifier and also a length of the protection sequence (231, 232, 233) are explicitly associated with one another.

**9.** Method according to Claim 3, **characterized in that** the maximum length of the message to be transmitted and/or the first identifier (221, 222, 223) and also the protection polynomial are explicitly associated with one another.

**10.** Method according to Claim 1, **characterized in that** the first identifier (221, 222, 223) is prescribed as a binary information item, wherein the length of the binary information item is prescribed on the basis of the total number of message classes.

**11.** Method according to Claim 8, **characterized in that** the first identifier (221, 222, 223) is prescribed as a binary information item, wherein the length of the binary information item is prescribed on the basis of a first number and/or a second number of message classes.

**12.** Method according to Claim 3, **characterized in that** a first and a second protection polynomial are distinguished, wherein the second protection polynomial is part of the first protection polynomial.

**Revendications**

**1.** Procédé de transmission de messages sur un système de bus (100), les messages étant transmis dans des trames de message (201, 202, 203) et la trame de message, outre le message, contenant également une séquence de sécurisation (231, 232, 233), des messages de différentes longueurs pouvant être transmis dans le système de bus et une longueur maximale d'un message étant prédéfinie pour tous les messages à transmettre dans le système de bus, un premier signe distinctif (221, 222, 223) étant contenu dans la trame de message, par lequel peut être prédéfinie la longueur maximale du message respectif à transmettre, **caractérisé en ce que** les messages sont divisés en un nombre total de classes de messages comprenant au moins deux classes de messages différentes, un nombre total de classes de messages existant, le premier signe distinctif (221, 222, 223) étant contenu dans le trame de message d'un sous-nombre de classes de messages et le sous-nombre étant inférieur au nombre total.

**2.** Procédé selon la revendication 1, **caractérisé en ce que** la séquence de sécurisation (231, 232, 233) est dépendante du premier signe distinctif ou de la longueur maximale prédéfinie du message à transmettre.

**3.** Procédé selon la revendication 1, **caractérisé en ce que** la séquence de sécurisation (231, 232, 233) est formée par un polynôme de sécurisation et le polynôme de sécurisation est prédéfini en fonction du premier signe distinctif (221, 222, 223) ou de la longueur maximale prédéfinie du message à transmettre.

**4.** Procédé selon la revendication 1, **caractérisé en ce qu'**un deuxième signe distinctif (241, 242, 243) est contenu dans la trame de message, lequel indique la longueur réelle du message, ce deuxième signe distinctif étant adapté en fonction du premier signe distinctif.

**5.** Procédé selon la revendication 4, **caractérisé en ce que** le deuxième signe distinctif (241, 242, 243) est adapté de telle sorte qu'une longueur du deuxième signe distinctif est modifiée.

**6.** Procédé selon la revendication 4, **caractérisé en ce que** le deuxième signe distinctif (241, 242, 243) est adapté de telle sorte qu'une unité de mesure pour le deuxième signe distinctif est modifiée.

**7.** Procédé selon la revendication 1, **caractérisé en ce qu'**il existe un nombre total de classes de messages et pour un premier nombre de classes de messages, la longueur maximale du message respectif à transmettre est à chaque fois prédéfinie par le premier signe distinctif (221, 222, 223), le premier signe distinctif correspondant à une valeur standard pour un deuxième nombre de classes de messages, la même longueur maximale des messages étant ainsi prédéfinie pour chaque classe de messages.

**8.** Procédé selon la revendication 1, **caractérisé en ce que** la longueur maximale du message à transmettre et/ou le premier signe distinctif ainsi qu'une longueur de la séquence de sécurisation (231, 232, 233) étant affectés explicitement les uns aux autres.

**9.** Procédé selon la revendication 3, **caractérisé en ce que** la longueur maximale du message à transmettre et/ou le premier signe distinctif (221, 222, 223) ainsi que le polynôme de sécurisation sont affectés explicitement les uns aux autres.

**10.** Procédé selon la revendication 1, **caractérisé en ce que** le premier signe distinctif (221, 222, 223) est prédéfini sous la forme d'une information binaire, la longueur de l'information binaire étant prédéfinie en fonction du nombre total de classes de messages.

**11.** Procédé selon la revendication 8, **caractérisé en ce que** le premier signe distinctif (221, 222, 223) est prédéfini sous la forme d'une information binaire, la longueur de l'information binaire étant prédéfinie en fonction d'un premier nombre et/ou d'un deuxième nombre de classes de messages.

**12.** Procédé selon la revendication 3, **caractérisé en ce que** la différence est faite entre un premier et un deuxième polynôme de sécurisation, le deuxième polynôme de sécurisation étant une partie du premier polynôme de sécurisation.

Fig. 1
100
101
102
103
104
105
106
107
108
109

241
K12
231
N1
211
201
K11
221
242
K22
232
N2
212
202
K21
222
243
K32
233
N3
213
203
K31
223

Fig. 2a

Fig. 2b

Fig. 2c

START
301
302
303
304
ENDE

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5854840 A
- EP 0616286 A1
- EP 0464014 A2